# DEMANDE DE BREVET EUROPEEN

(11) **EP 1 093 046 A1**
(43) Date de publication de la demande: **18.04.2001**
(21) Numéro de dépôt: 00203484.1
(22) Date de dépôt: 06.10.2000
(51) Int. Cl.: G06F 1/08

(54) **Procédé pour sélectionner un signal parmi N signaux**

(30) Priorité: 15.10.1999 FR 9912925
(71) Demandeur: Koninklijke Philips Electronics N.V., 5621 BA Eindhoven (NL)
(72) Inventeur: Digabel, Patrick, 75008 Paris (FR)
(74) Mandataire: Chaffraix, Jean

(57) **Abrégé**

La présente invention concerne un procédé pour sélectionner un signal parmi N signaux, consistant à placer dans un état actif, au moyen d'un signal de sélection, un signal de validation associé au signal à sélectionner.
Le procédé selon l'invention prévoit d'attribuer à chacun des signaux de validation l'état de son signal de sélection associé lorsque tous les signaux de validation présentent un état inactif.
L'invention permet de préserver l'intégrité du rapport cyclique du signal résultant de la sélection ainsi opérée.
- Application:: Commutation de signaux d'horloge dans un lecteur de cartes à puce.

## Description

La présente invention concerne un procédé pour sélectionner un signal parmi N signaux, visant à placer dans un état actif, au moyen d'un signal de sélection, un signal de validation associé au signal à sélectionner.

Le brevet américain No. 4,853,653 décrit un dispositif d'aiguillage destiné à délivrer un signal de sortie sélectionné parmi N signaux d'entrée, mettant en oeuvre un tel procédé. Dans ce dispositif d'aiguillage, les signaux de validation résultent d'une mémorisation de signaux de sélection qui leur sont associés. Lorsque l'un des signaux de validation est dans un état actif, c'est-à-dire au niveau logique 1 selon la description qui est faite du dispositif connu, la mémorisation des signaux de sélection associés aux autres signaux de validation est inhibée. Cette inhibition n'est levée qu'après une durée prédéterminée, suivant l'instant où celui des signaux de sélection qui est associé au signal de validation qui est à l'état actif passe à un état passif, c'est-à-dire du niveau logique 1 au niveau logique 0 selon la description qui est faite du dispositif connu. Le procédé mis en oeuvre dans le dispositif d'aiguillage connu induit donc un retard dans la commutation des signaux, c'est-à-dire qu'il existe un intervalle de temps non négligeable au cours duquel le signal de sortie du dispositif d'aiguillage ne correspond à aucun des signaux d'entrée. Ceci implique que le signal de sortie présente, durant plusieurs périodes consécutives dudit signal, un rapport cyclique nul.
Une telle période de latence n'est pas acceptable dans nombre d'applications. En particulier, lorsque le dispositif d'aiguillage est utilisé au sein d'un appareil destiné à échanger des données avec une carte à puce, lequel appareil devant alors fournir à la carte à puce un signal d'horloge sélectionné parmi N signaux d'horloge présents dans l'appareil, le signal d'horloge fourni à la carte à puce doit être conforme aux dispositions d'une norme ISO/IEC 7816-3:1997 qui prévoit que le rapport cyclique dudit signal doit toujours être compris entre 45% et 55%. Au cours d'une commutation, une seule infraction à cette disposition est tolérable selon la norme ISO/IEC 7816-3:1997.
Le procédé de sélection mis en oeuvre dans le dispositif d'aiguillage connu provoquera inéluctablement, du fait des inhibitions décrites plus haut, une succession d'infractions à cette disposition et n'est donc pas compatible avec la norme ISO/IEC 7816-3:1997.
Si la suppression de l'étape d'inhibition apparaît comme une solution naturelle à ce problème, elle soulève toutefois d'autres difficultés.
En effet, si les signaux de sélection commutent en même temps que se produit un front actif ordonnant la mémorisation desdits signaux, l'état suivant des signaux de validation est imprévisible.
Si, par exemple, le changement d'état du signal de sélection associé à celui des signaux de validation qui était précédemment actif a été détecté, ledit signal de validation prendra un état inactif. Si, dans ce même cas de figure, le passage à l'état actif du signal de sélection associé au signal de validation qui devrait alors prendre un état actif n'est pas détecté du fait de la simultanéité de sa commutation avec le front actif ordonnant la mémorisation, le signal de validation associé restera à l'état inactif. Dans ce cas de figure, tous les signaux de validation seront à l'état inactif jusqu'au prochain front actif commandant la mémorisation des signaux de sélection. Ceci provoquera l'apparition d'une période de latence au cours de laquelle, à deux reprises, le signal de sortie du dispositif d'aiguillage présentera un rapport cyclique nul. Un tel procédé n'est donc pas non plus compatible avec la norme ISO/IEC 7816-3:1997.

L'un des buts de la présente invention est de remédier à cet inconvénient en proposant un procédé qui, dans le cas de figure décrit ci-dessus, permet de générer un signal dont le rapport cyclique n'enfreint pas les dispositions de la norme ISO/IEC 7816-3:1997.

A cet effet, un procédé conforme au paragraphe introductif inclut selon l'invention une étape d'attribution à chacun des signaux de validation de l'état de son signal de sélection associé, étape d'attribution mise en oeuvre lorsque tous les signaux de validation présentent un état inactif.

Selon ce procédé, dès qu'une simultanéité d'états inactifs des signaux de validation est détectée, l'étape d'attribution est mise en oeuvre et celui des signaux de validation qui aurait du prendre l'état actif se voit attribuer cet état. Une telle correction quasi instantanée permet d'assurer qu'aucune perturbation significative du rapport cyclique du signal de sortie généré grâce au procédé conforme à l'invention n'apparaît dans le cas de figure décrit ci-dessus.

Une commutation des signaux de sélection se produisant en même temps qu'un front actif ordonnant la mémorisation desdits signaux peut provoquer d'autres effets néfastes. Si le changement d'état du signal de sélection associé à celui des signaux de validation qui était précédemment actif n'a pas été détecté du fait de la simultanéité de sa commutation avec le front actif ordonnant la mémorisation, ledit signal de validation restera à l'état actif. Si, dans ce même cas de figure, le passage à l'état actif du signal de sélection associé au signal de validation qui doit alors prendre un état actif est détecté, le signal de validation associé prendra l'état actif. Dans ce cas de figure, au moins deux signaux de validation seront à l'état actif jusqu'au prochain front actif commandant la mémorisation des signaux de sélection. Ceci provoquera l'apparition d'une période de latence au cours de laquelle le signal de sortie du dispositif d'aiguillage pourra rester à l'état actif et donc présenter à plusieurs reprises un rapport cyclique égal à l'unité. Ainsi qu'exposé précédemment, ceci est contraire aux dispositions de la norme ISO/IEC 7816-3:1997.

Un autre but de la présente invention est de remédier à cet inconvénient en proposant un procédé qui, dans le cas de figure décrit ci-dessus, permet de générer un signal dont le rapport cyclique n'enfreint pas les dispositions de la norme ISO/IEC 7816-3:1997.

A cet effet, un procédé conforme au paragraphe introductif inclut selon l'invention une étape de réinitialisation à un état inactif de ceux des signaux de validation qui n'ont pas présenté de front actif depuis une date prédéterminée, étape mise en oeuvre lorsqu'au moins deux signaux de validation présentent simultanément un état actif.

Selon ce procédé, dès qu'une simultanéité d'états actifs de différents signaux de validation est détectée, l'étape de réinitialisation est mise en oeuvre et celui des signaux de validation qui aurait du prendre l'état inactif se voit attribuer cet état. Une telle correction quasi instantanée permet d'assurer qu'aucune perturbation significative du rapport cyclique du signal de sortie généré grâce au procédé conforme à l'invention n'apparaît dans le cas de figure décrit ci-dessus.

Dans une de ses variantes, l'invention concerne également un procédé conforme au paragraphe introductif qui inclut une étape de réinitialisation à un état inactif de tous les signaux de validation qui n'ont pas présenté de front actif depuis une date prédéterminée, étape mise en oeuvre lorsque l'un des signaux de validation présente un front actif.

Une telle variante permet d'éviter d'avoir à identifier l'état des différents signaux de validation. Il suffira de déterminer lequel a présenté un front actif le plus récemment, tous les autres étant alors réinitialisés à l'état inactif.

L'invention concerne également un procédé pour sélectionner un signal parmi N signaux, consistant à placer dans un état actif, au moyen d'un signal de sélection, un signal de validation associé au signal à sélectionner, procédé incluant des étapes d'attribution et de réinitialisation telles que décrites plus haut.

Un tel procédé, lorsqu'il mis en oeuvre dans un dispositif d'aiguillage, permet de générer un signal de sortie présentant une grande immunité aux effets néfastes qui peuvent apparaître lorsque les signaux de sélection et le front actif ordonnant la mémorisation desdits signaux se produisent simultanément.

Ainsi qu'exposé précédemment, l'invention concerne également un procédé permettant à une carte à puce d'échanger des données avec un appareil, prévoyant l'acheminement vers la carte à puce d'un signal d'horloge sélectionné parmi N signaux d'horloge fournis par l'appareil, procédé caractérisé en ce qu'il met en oeuvre à cet effet un procédé tel que décrit plus haut.

Dans un de ses modes de mise en oeuvre, l'invention concerne également un dispositif d'aiguillage destiné à délivrer sur une sortie un signal sélectionné parmi N signaux d'entrée, lorsqu'un signal de validation associé audit signal d'entrée a été placé dans un état actif au moyen d'un signal de sélection associé, dispositif incluant:
. des moyens d'attribution permettant l'attribution à chacun des signaux de validation de l'état de son signal de sélection associé, moyens destinés à être activés lorsque tous les signaux de validation présentent un état inactif, et
. des moyens de réinitialisation permettant la réinitialisation à un état inactif de ceux des signaux de validation qui n'ont pas présenté de front actif depuis une date prédéterminée, moyens destinés à être activés lorsqu'au moins deux signaux de validation présentent simultanément un état actif.

L'invention est particulièrement adaptée à la sélection de signaux d'horloge en vue de leur acheminement vers une carte à puce. L'invention concerne donc également un appareil destiné à échanger des données avec une carte à puce, et notamment à lui fournir un signal d'horloge sélectionné parmi N signaux d'horloge, appareil caractérisé en ce qu'il comporte un dispositif d'aiguillage tel que décrit ci-dessus.

L'invention sera mieux comprise à l'aide de la description suivante, faite à titre d'exemple non-limitatif et en regard des dessins annexés, dans lesquels:
- la figure 1 est un schéma fonctionnel partiel décrivant un dispositif d'aiguillage mettant en oeuvre un procédé selon l'invention,
- la figure 2 est un schéma électrique décrivant un module de détection présent dans un tel dispositif d'aiguillage,
- la figure 3 est un schéma électrique décrivant un autre module de détection présent dans un tel dispositif d'aiguillage,
- la figure 4 est un schéma électrique décrivant un autre module de détection présent dans un tel dispositif d'aiguillage, et
- la figure 5 est un schéma fonctionnel décrivant un appareil incluant un tel dispositif d'aiguillage.

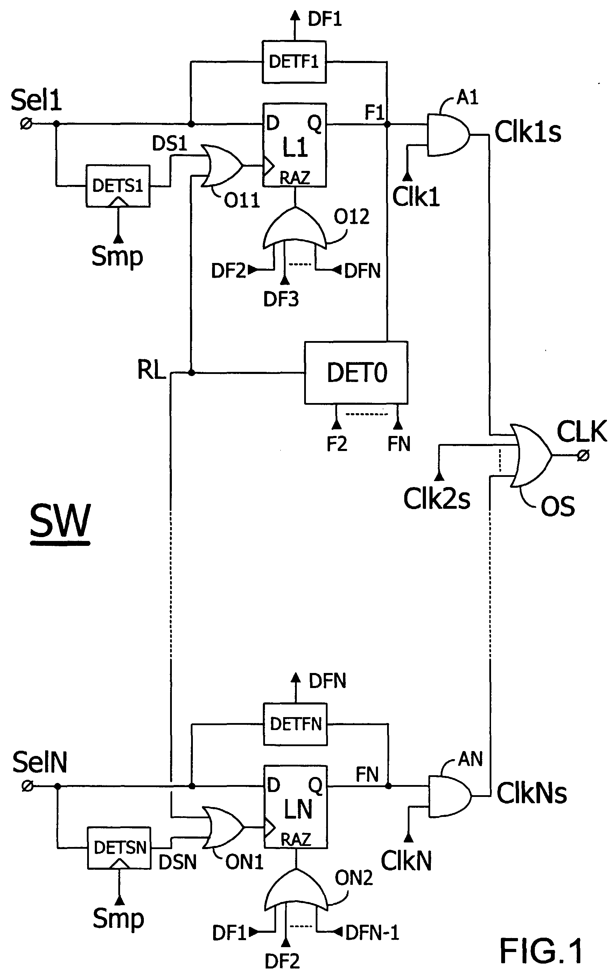

La figure 1 représente un dispositif d'aiguillage SW selon un mode de mise en oeuvre préféré de l'invention. Ce dispositif d'aiguillage SW est destiné à délivrer sur une sortie CLK un signal Clki sélectionné parmi N signaux d'entrée Clk1...ClkN, lorsqu'un signal de validation Fi (pour i =1 à N) associé audit signal d'entrée Clki a été placé dans un état actif au moyen d'un signal de sélection associé Seli. Ce dispositif inclut:
. des moyens d'attribution (O11...ON1) permettant l'attribution à chacun des signaux de validation Fi (pour i=1 à N) de l'état de son signal de sélection associé Seli, moyens destinés à être activés lorsque tous les signaux de validation F1...FN présentent un état inactif, et
. des moyens de réinitialisation (O12...O1N) permettant la réinitialisation à un état inactif de ceux des signaux de validation qui n'ont pas présenté de front actif depuis une date prédéterminée, moyens destinés à être activés lorsqu'au moins deux signaux de validation présentent simultanément un état actif.
Dans ce mode de réalisation, le dispositif d'aiguillage SW inclut en outre:
. des moyens de détection DETFi (pour i=1 à N) de fronts des signaux de sélection Sel1...SelN, et
. des moyens de mémorisation Li(pour i=1 à N) de l'état des signaux de sélection Sel1...SelN, moyens destinés à être activés par des fronts actifs desdits signaux, et à délivrer les signaux de validation F1...FN.
Les moyens de mémorisation sont matérialisés dans ce mode de réalisation par de simples bascules D.
Dans ce mode de réalisation, le dispositif d'aiguillage SW comporte en outre des moyens de détection DET0 d'une simultanéité d'états inactifs de tous les signaux de validation F1...FN, moyens de détection destinés à contrôler les moyens d'attribution (O11...ON1).
Ce dispositif d'aiguillage SW comporte également des moyens de détection DETFi (pour i=1 à N) des fronts actifs des signaux de validation F1...FN, moyens de détection destinés à contrôler les moyens de réinitialisation (O12...O1N).
Le principe de fonctionnement de ce dispositif d'aiguillage SW est le suivant:
Lorsqu'un signal de sélection Seli est à l'état actif, matérialisé ici par un niveau logique 1, compte tenu de la nature des moyens de mémorisation, cet état actif est mémorisé dans la bascule Li et le signal de validation Fi est à l'état actif. Dans un mode de fonctionnement normal, les autres signaux de sélection Sel1...Seli-1,Seli+1...SelN sont à l'état inactif, c'est-à-dire au niveau logique 0, et les signaux de validation F1...Fi-1,Fi+1...FN qui leur sont associés sont également à l'état inactif. Ces signaux de validation inhibent des portes ET à deux entrées A1...Ai-1,Ai+1...AN, dont des signaux de sortie Clk1s...Clk(i-1)s,Clk(i+1)s...ClkNs sont alors maintenus dans l'état inactif. Seule une porte ET deux entrées Ai n'est pas inhibée, du fait de l'état actif du signal de validation Fi, ladite porte ET Ai fournissant sur une sortie le signal d'entrée Clki. Ce signal est transmis à une entrée d'une porte OU à N entrées OS dont les N-1 entrées restantes sont reliées aux sorties des autres portes ET A1...Ai-1,Ai+1...AN. Le dispositif d'aiguillage SW fournit ainsi un signal de sortie CLK qui n'est autre que le signal d'entrée Clki qui a été sélectionné parmi les N signaux d'entrée Clk1...ClkN en plaçant dans un état actif, au moyen du signal de sélection Seli, le signal de validation Fi associé au signal d'entrée Clki. La mémorisation de l'état d'un signal de sélection Seli (pour i=1 à N) est effectuée comme suit: lorsque ledit signal de sélection passe d'un état inactif, à un état actif, un dispositif de détection de front DETSi qui est associé audit signal de sélection Seli délivre un signal DSi qui présente un front actif, c'est-à-dire un front montant dans ce mode de réalisation. Ce front actif parvient à une entrée d'horloge de la bascule D Li destinée à mémoriser l'état du signal de sélection Seli, via une porte OU Oi1, avec un certain retard par rapport à l'instant où ledit signal de sélection a changé d'état. L'état actif du signal de sélection Seli peut donc être mémorisé dans la bascule D Li.
Les détections de fronts opérées par les dispositifs de détection DETS1...DETSN font nécessairement appel à un signal d'échantillonnage Smp. Ce signal Smp sera avantageusement matérialisé par celui des signaux d'entrée Clk1...ClkN dont la fréquence est la plus basse. Si deux signaux de sélection Seli et Selj commutent en même temps que se produit un front actif dudit signal d'échantillonnage Smp, les nouveaux états desdits signaux Seli et Selj risquent de ne pas être mémorisés correctement dans les bascules D Li et Lj qui leur sont associées. En effet, un passage de l'état inactif à l'état actif, ou réciproquement, risque d'être ignoré, le front correspondant étant apparu simultanément, dans cette hypothèse, avec celui du signal d'échantillonnage Smp.
Si, par hypothèse, des signaux de sélection Seli et Selj étaient précédemment actifs et inactifs respectivement, deux cas de figure potentiellement néfastes au bon fonctionnement du dispositif d'aiguillage SW peuvent se produire.
Dans un premier cas de figure, le changement d'état du signal de sélection Seli aura été détecté, alors que le changement d'état du signal Selj ne l'aura pas été. Dans ce cas de figure, tous les signaux de validation sont alors inactifs et le signal de sortie CLK du dispositif d'aiguillage SW est maintenu à l'état inactif. La mise en oeuvre d'une étape d'attribution incluse dans le procédé de sélection selon l'invention permet d'éviter qu'une telle situation n'influe sur le rapport cyclique du signal de sortie CLK. En effet, la simultanéité d'états inactifs des signaux de validation F1...FN est immédiatement détectée par les moyens de détection DET0, qui délivrent un signal RL qui présente alors un front actif. Ce front actif est transmis simultanément à l'entrée d'horloge de chaque bascule D Li (pour i=1 à N), bascule D qui effectue alors une nouvelle mémorisation de son signal de sélection associé Seli. A l'issue de cette étape d'attribution, seul est à l'état actif le signal de validation Fj associé à celui des signaux de sélection Sel1...SelN qui est à l'état actif, en l'occurrence Selj. L'ensemble de l'étape d'attribution se déroulant de manière asynchrone, et donc quasi
instantanément, la période de latence au cours de laquelle tous les signaux de validation F1...FN auront été dans un état inactif aura été si brève qu'elle n'aura pas d'influence significative sur le rapport cyclique du signal de sortie CLK du dispositif d'aiguillage SW.

Un deuxième cas de figure potentiellement néfaste au bon fonctionnement du dispositif d'aiguillage SW se produit si, alors que les signaux de sélection Seli et Selj étaient précédemment actifs et inactifs respectivement, le changement d'état du signal de sélection Selj a été détecté, alors que le changement d'état du signal Seli ne l'a pas été. Dans ce cas de figure, deux signaux de validation sont alors actifs et le signal de sortie CLK du dispositif d'aiguillage SW peut rester à l'état actif pendant une période du signal d'échantillonnage Smp, durée qui peut être très supérieure à la moitié de la période du signal de sortie CLK du dispositif d'aiguillage SW. La mise en oeuvre d'une étape de réinitialisation incluse dans le procédé de sélection selon l'invention permet d'éviter qu'une telle situation n'influe sur le rapport cyclique du signal de sortie CLK. En effet, une simultanéité d'états actifs des signaux de validation Fi et Fj est immédiatement détectée via les moyens de détection DETFi (pour i=1 à N). Seul le module de détection DETFj identifie un front actif de son signal de validation associé Fj, puisque seul le signal de sélection Selj a présenté un front actif, passant de l'état inactif à l'état actif. Ledit module DETFj délivre un signal DFj, qui présente alors un front actif, à N-1 portes OU à N-1 entrées O12...O(j-1)2,O(j+1)2...ON2. Les sorties de ces portes logiques sont respectivement reliées à des entrées de réinitialisation des bascules D L1...Lj-1,Lj+1...LN. Le front actif du signal DFi réinitialise à l'état inactif les sortie desdites bascule D, et donc des signaux de validation F1...Fj-1,Fj+1...FN. A l'issue de cette étape de réinitialisation, seul est à l'état actif le signal de validation Fj associé à celui des signaux de sélection Sel1...SelN qui est à l'état actif, en l'occurrence Selj. L'ensemble de l'étape de réinitialisation se déroulant de manière asynchrone, et donc quasi instantanément, la période de latence au cours de laquelle au moins deux signaux de validation F1...FN auront été simultanément dans un état actif aura été si brève qu'elle ne pourra pas avoir d'influence significative sur le rapport cyclique du signal de sortie CLK du dispositif d'aiguillage SW.

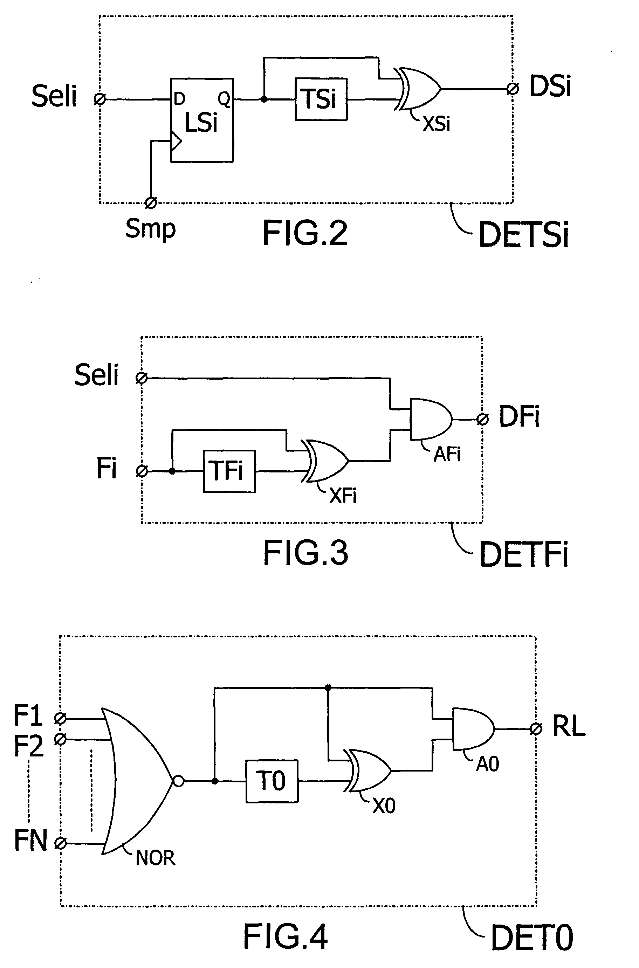

La figure 2 illustre un mode de réalisation possible d'un détecteur de fronts DETSi inclus dans les moyens de détection de fronts des signaux de sélection Sel1...SelN. Ce détecteur de front comporte dans cet exemple:
. une bascule D LSi, munie d'une entrée de données D destinée à recevoir l'un des signaux de sélection Seli, d'une entrée d'horloge destinée à recevoir le signal d'échantillonnage Smp, et d'une sortie de données Q, et
. une porte OU EXCLUSIF XSi munie d'une entrée directement reliée à la sortie de données Q de la bascule LSi, d'une autre entrée reliée à la sortie de données Q de la bascule LSi via une cellule à retard TSi, et d'une sortie formant la sortie du détecteur de fronts DETSi.
Le fonctionnement de ce détecteur est le suivant: l'état du signal de sélection Seli est mémorisé à chaque front actif du signal d'échantillonnage Smp. Lorsque la sortie de données Q de la bascule D LSi change d'état, consécutivement à un changement d'état du signal de sélection Seli, ce changement est instantanément transmis à l'une des entrées de la porte OU-EXCLUSIF XSi, alors que l'autre entrée reste, pendant la durée du retard induit par la cellule à retard TSi, dans l'état précédent de la sortie de données Q de la bascule D LSi. Ainsi, pendant cette durée, la sortie de la porte OU-EXCLUSIF XSi prend un état actif et aura donc délivré un signal DSi présentant un front actif lorsqu'un front du signal de sélection Seli a été détecté.

La figure 3 illustre un mode de réalisation d'un détecteur de fronts actifs inclus dans les moyens de détection des fronts actifs des signaux de validation. Ce détecteur de fronts actifs comporte:
. une porte OU EXCLUSIF XFi munie d'une entrée destinée à recevoir directement l'un des signaux de validation Fi, d'une autre entrée destinée à recevoir ledit signal de validation Fi via une cellule à retard TFi, et d'une sortie, et
. une porte ET AFi munie d'une entrée destinée à recevoir le signal de sélection Seli associé au signal de validation Fi, d'une autre entrée reliée à la sortie de la porte OU EXCLUSIF XFi, et d'une sortie formant la sortie du détecteur de fronts actifs DETFi.
Le fonctionnement de ce détecteur est le suivant: lorsque le signal de validation Fi change d'état, ce changement est instantanément transmis à l'une des entrées de la porte OU-EXCLUSIF XFi, alors que l'autre entrée reste, pendant la durée du retard induit par la cellule à retard TFi, dans l'état précédent du signal de validation Fi. Ainsi, pendant cette durée, la sortie de la porte OU-EXCLUSIF XFi prend un état actif et aura donc délivré un signal présentant un front actif lorsqu'un front du signal de sélection Fi a été détecté. Ce front actif ne sera présent dans le signal de sortie DFi du détecteur qu'après son passage via la porte ET AFi, et donc à la condition que le signal de sélection associé Seli ait lui-même pris un état actif, c'est-à-dire uniquement si le changement d'état du signal de validation Fi correspond bien à un front actif. Dans un autre mode de réalisation, l'entrée de la porte ET AFi qui n'est pas reliée à la sortie de la porte OU-EXCLUSIF XFi pourra être câblée de manière à recevoir le signal de validation Fi au lieu du signal de sélection Seli.

La figure 4 illustre un mode de réalisation des moyens de détection DET0 d'une simultanéité d'états inactifs de tous les signaux de validation F1...FN. Ces moyens de détection comportent:
. une porte NOR munie de N entrées destinées à recevoir les N signaux de validation F1...FN, et d'une sortie,
. une porte OU EXCLUSIF X0 munie d'une entrée directement reliée a la sortie de la porte NOR, d'une autre entrée reliée à ladite sortie de la porte NOR via une cellule à retard T0, et d'une sortie, et
. une porte ET A0 munie d'une entrée reliée à la sortie de la porte NOR, d'une autre entrée reliée à la sortie de la porte OU EXCLUSIF X0, et d'une sortie formant la sortie des moyens de détection DET0.
Le fonctionnement de ces moyens de détection DET0 est le suivant: lorsque le signal de sortie de la porte NOR change d'état, ce changement est instantanément transmis à l'une des entrées de la porte OU-EXCLUSIF X0, alors que l'autre entrée reste, pendant la durée du retard induit par la cellule à retard T0, dans l'état précédent de la sortie de la porte NOR. Ainsi, pendant cette durée, la sortie de la porte OU-EXCLUSIF X0 prend un état actif et aura donc délivré un signal présentant un front actif lorsqu'un front du signal présent à la sortie de la porte NOR a été détecté. Ce front actif ne sera présent dans le signal de sortie RL des moyens de détection DET0 qu'après son passage via la porte ET A0, et donc à la condition que le signal de sortie de la porte NOR ait lui-même pris un état actif, c'est-à-dire uniquement si tous les signaux de sélection sont dans un état actif.

D'autres modes de réalisation des moyens de détection décrits dans les figures 2 à 4 sont bien sûr imaginables. Si, par exemple, les états actifs et inactifs étaient choisis comme correspondant respectivement aux niveaux logiques O et 1 plutôt qu'aux niveaux logiques 1 et 0 comme décrit ci-dessus, il va de soi que d'autres fonctions logiques, élaborées grâce aux théorèmes de Morgan, devront être utilisées. De telles modifications et adaptations sont à la portée de l'homme du métier.

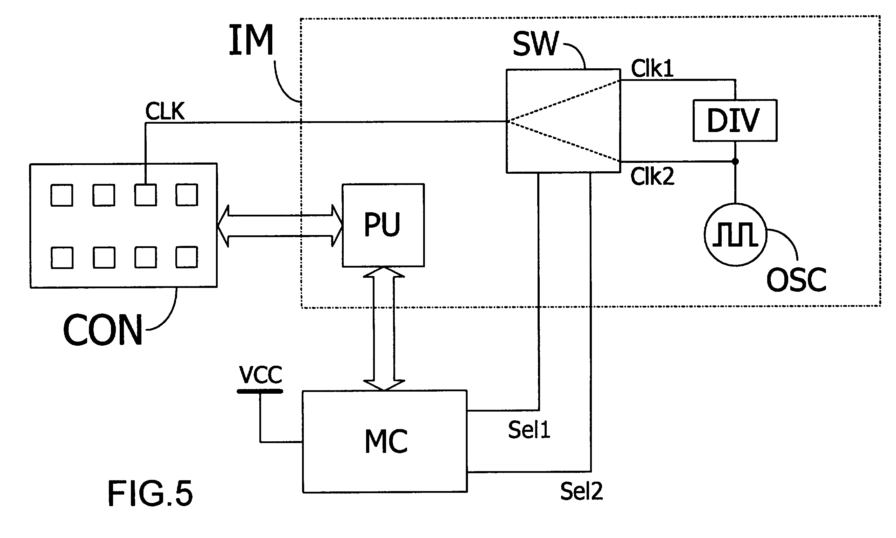

La figure 5 représente schématiquement un appareil destiné à communiquer avec une carte à puce, lequel appareil comprend:
. un connecteur CON destiné à être relié électriquement à un circuit intégré présent à la surface de ladite carte à puce, et présentant au moins une borne, dite d'horloge, destinée à délivrer audit circuit intégré un signal d'horloge CLK,
. un microcontrôleur MC destiné à échanger des données avec ledit circuit intégré, et
. un module d'interface IM, disposé entre le connecteur CON et le microcontrôleur MC, comportant un oscillateur OSC suivi d'un diviseur de fréquence DIV, et une unité de traitement PU, module permettant un échange de données entre le microcontrôleur MC et le circuit intégré.
Une sortie du diviseur de fréquence DIV délivre un signal d'horloge transitoire Clk1, l'oscillateur OSC fournissant un signal d'horloge permanent Clk2.

Les interactions entre l'appareil et la carte à puce sont décrites dans la norme ISO/IEC 7816-3:1997.
Une phase dite d'activation de la carte à puce se déroule en deux temps : dans un premier régime de fonctionnement, dit régime de fonctionnement transitoire, le système constitué par l'association de la carte à puce avec l'appareil n'est pas encore opérationnel. L'appareil doit d'abord détecter la présence de la carte à puce, puis placer le circuit intégré présent à la surface de celle-ci dans ses conditions de fonctionnement nominales, c'est-à-dire, entre autres, lui fournir une tension d'alimentation ou encore initialiser des chemins de données pour que le circuit intégré puisse communiquer avec l'appareil. Dans un deuxième régime de fonctionnement, dit régime de fonctionnement permanent, le circuit intégré est alimenté en tension et reçoit un signal d'horloge permanent à une fréquence dite opérationnelle, et les chemins de données sont prêts à véhiculer des informations entre le circuit intégré et l'appareil. Au cours du régime de fonctionnement transitoire, le circuit intégré doit recevoir le signal d'horloge transitoire Clk1, dont la fréquence peut être différente de la fréquence opérationnelle. Il est préférable d'utiliser un signal ayant une fréquence inférieure à la fréquence opérationnelle, ce qui permet de réduire la consommation d'énergie du circuit intégré pendant le régime transitoire. Un tel choix est particulièrement avantageux dans des applications où la source d'énergie utilisée pour fournir au circuit intégré sa tension d'alimentation est une batterie, comme c'est généralement le cas pour un appareil portable. Le système doit donc effectuer, à la fin du régime de fonctionnement transitoire, une commutation du signal CLK acheminé en guise de signal d'horloge au circuit intégré présent à la surface de la carte à puce. Cette commutation est réalisée par un dispositif d'aiguillage SW inclus dans le module d'interface IM qui, lorsqu'il en reçoit l'ordre, matérialisé par un changement d'états de signaux de sélection Sel1 et Sel2, remplace le signal d'horloge transitoire Clk1, qui constituait le signal d'horloge CLK du circuit intégré au cours du régime de fonctionnement transitoire, par le signal d'horloge permanent Clk2 destiné à constituer le signal d'horloge CLK du circuit intégré pendant le régime de fonctionnement permanent.

L'utilisation à ces fins d'un dispositif d'aiguillage SW mettant en oeuvre un procédé de sélection selon l'invention permet de garantir que les commutations opérées par ledit dispositif d'aiguillage seront en conformité avec celles des dispositions de la norme ISO/IEC 7816-3:1997 précitée qui concernent l'intégrité du rapport cyclique du signal d'horloge CLK fourni par l'appareil au circuit intégré présent à la surface de la carte à puce.

## Revendications

1. Procédé pour sélectionner un signal parmi N signaux, visant à placer dans un état actif, au moyen d'un signal de sélection, un signal de validation associé au signal à sélectionner, procédé incluant une étape d'attribution à chacun des signaux de validation de l'état de son signal de sélection associé, étape d'attribution mise en oeuvre lorsque tous les signaux de validation présentent un état inactif.

2. Procédé pour sélectionner un signal parmi N signaux, consistant à placer dans un état actif, au moyen d'un signal de sélection, un signal de validation associé au signal à sélectionner, procédé incluant une étape de réinitialisation à un état inactif de ceux des signaux de validation qui n'ont pas présenté de front actif depuis une date prédéterminée, étape mise en oeuvre lorsque au moins deux signaux de validation présentent simultanément un état actif.

3. Procédé pour sélectionner un signal parmi N signaux, consistant à placer dans un état actif, au moyen d'un signal de sélection, un signal de validation associé au signal à sélectionner, procédé incluant une étape de réinitialisation à un état inactif de tous les signaux de validation qui n'ont pas présenté de front actif depuis une date prédéterminée, étape mise en oeuvre lorsque l'un des signaux de validation présente un front actif.

4. Procédé pour sélectionner un signal parmi N signaux, consistant à placer dans un état actif, au moyen d'un signal de sélection, un signal de validation associé au signal à sélectionner, procédé caractérisé en ce qu'il inclut des étapes d'attribution et de réinitialisation telles que définies dans les revendications 1 à 3.

5. Procédé permettant à une carte à puce d'échanger des données avec un appareil, prévoyant l'acheminement vers la carte à puce d'un signal d'horloge sélectionné parmi N signaux d'horloge fournis par l'appareil, procédé caractérisé en ce qu'il met en oeuvre à cet effet un procédé conforme à l'une des revendications 1 à 4.

6. Dispositif d'aiguillage destiné à délivrer sur une sortie un signal sélectionné parmi N signaux d'entrée, lorsqu'un signal de validation associé audit signal d'entrée a été placé dans un état actif au moyen d'un signal de sélection associé, dispositif incluant:
. des moyens d'attribution permettant l'attribution à chacun des signaux de validation de l'état de son signal de sélection associé, moyens destinés à être activés lorsque tous les signaux de validation présentent un état inactif, et
. des moyens de réinitialisation permettant la réinitialisation à un état inactif de ceux des signaux de validation qui n'ont pas présenté de front actif depuis une date prédéterminée, moyens destinés à être activés lorsqu'au moins deux signaux de validation présentent simultanément un état actif.

7. Dispositif d'aiguillage selon la revendication 6, caractérisé en ce qu'il inclut en outre:
. des moyens de détection de fronts actifs des signaux de sélection, et
. des moyens de mémorisation de l'état des signaux de sélection, moyens destinés à être activés par des fronts actifs desdits signaux, et à délivrer les signaux de validation.

8. Dispositif d'aiguillage selon la revendication 7, caractérisé en ce qu'il inclut en outre:
. des moyens de détection d'une simultanéité d'états inactifs de tous les signaux de validation, moyens de détection destinés à contrôler les moyens d'attribution.

9. Dispositif d'aiguillage selon la revendication 7, caractérisé en ce qu'il inclut en outre:
. des moyens de détection de fronts actifs des signaux de validation, moyens de détection destinés à contrôler les moyens de réinitialisation.

10. Appareil destiné à échanger des données avec une carte à puce, et notamment à lui fournir un signal d'horloge sélectionné parmi N signaux d'horloge, appareil caractérisé en ce qu'il comporte un dispositif d'aiguillage conforme à la revendication 6.
